(19) Europäisches Patentamt
European Patent Office
Office européen des brevets

(11) **EP 3 002 525 B1**

(12) **EUROPÄISCHE PATENTSCHRIFT**

(45) Veröffentlichungstag und Bekanntmachung des Hinweises auf die Patenterteilung:
**23.03.2022   Patentblatt 2022/12**

(21) Anmeldenummer: **15002580.7**

(22) Anmeldetag: **02.09.2015**

(51) Internationale Patentklassifikation (IPC):
**F24F 7/08** *(2006.01)*      **F24F 11/00** *(2018.01)*

(52) Gemeinsame Patentklassifikation (CPC):
**F24F 7/08; F24F 11/77;** F24F 11/32; F24F 11/74; F24F 2110/30; F24F 2110/40; Y02B 30/70

(54) **VERFAHREN ZUM BETREIBEN EINER BELÜFTUNGSANLAGE UND BELÜFTUNGSANLAGE**

METHOD FOR OPERATING A VENTILATION SYSTEM AND VENTILATION SYSTEM

PROCEDE DESTINE AU FONCTIONNEMENT D'UNE INSTALLATION DE VENTILATION ET INSTALLATION DE VENTILATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2014   DE 102014014107**

(43) Veröffentlichungstag der Anmeldung:
**06.04.2016   Patentblatt 2016/14**

(73) Patentinhaber: **FläktGroup Deutschland GmbH 44625 Herne (DE)**

(72) Erfinder: **Moolenaar, Fokke 4673 Gaspoltshofen (AT)**

(74) Vertreter: **Cohausz Hannig Borkowski Wißgott Patentanwaltskanzlei GbR Schumannstraße 97-99 40237 Düsseldorf (DE)**

(56) Entgegenhaltungen:
**WO-A1-2014/123044      FR-A1- 2 957 661 GB-A- 2 257 547      US-A- 4 995 307**

**Beschreibung**

Die Erfindung betrifft ein Verfahren zum Betreiben einer Belüftungsanlage für einen Raum, sowie eine entsprechende Belüftungsanlage, mit wenigstens zwei Luftkanälen, in denen jeweils eine Lüfteranordnung aus zwei oder mehr identisch angesteuerten Lüftern einliegt, wobei bei einer ersten dieser Lüfteranordnungen über wenigstens einen ihrer Lüfter ein Differenzdruck ermittelt und unter Verwendung dieses Differenzdrucks ein im Normalbetrieb von der ersten Lüfteranordnung geförderter Volumenstrom berechnet wird.

Verfahren und Raumbelüftungsanlagen dieser Art sind bekannt, beispielsweise aus der internationalen Patentanmeldung WO 2014/123044 A1. Ähnliche Verfahren und Anlagen offenbaren die Schriften FR 2957661 A1, US 4,995,307 A und GB 2257547 A. Sie werden beispielsweise in Bürogebäuden oder zur Belüftung von Hallen wie Sporthallen oder Schwimmbadhallen eingesetzt. Bei den aus mehreren Lüftern bestehenden Lüfteranordnungen spricht man auch von einer Fan Wall. Eine Fan Wall hat den Vorteil, dass sie eine kürzere Einbautiefe gegenüber einem großen Ventilator besitzt.

Im einfachsten Fall umfasst die Raumbelüftungsanlage einen in den Raum mündenden Zuluftkanal und einen aus dem Raum herausführenden Abluftkanal, in dem jeweils eine Fan Wall einliegt. Es ist bekannt, die Lüfteranordnungen durch eine Volumenstromregelung zu regeln, insbesondere derart, dass im Raum ein Normaldruck herrscht, d.h. weder ein Unterdruck noch ein Überdruck vorliegt. Dies kann derart erfolgen, dass die die Zuluft fördernde und die Abluft fördernde Lüfteranordnung jeweils so eingestellt sind, dass sie denselben Volumenstrom fördern. In einzelnen Anwendungen kann dies jedoch auch anders sein, um bewusste einen Unter- oder Überdruck im Raum zu erzeugen.

Für die Regelung der jeweiligen Lüfteranordnung ist der von ihr tatsächlich geförderte Volumenstrom erforderlich.

Da bei der Erstellung von Belüftungsanlagen ein hoher Kostendruck herrscht, ist die für die Regelung erforderliche Messtechnik respektive Sensorik sehr einfach und minimalistisch gehalten. So wird beispielsweise kein Volumenstromsensor zur Messung des Volumenstroms sondern lediglich ein Differenzdrucksensor zur Messung des Differenzdrucks über zumindest einem der Lüfter der entsprechenden Lüfteranordnung verwendet.

Aus diesem Differenzdruck kann im Normalbetrieb der Lüfteranordnung der von ihr geförderte Volumenstrom unter der Annahme berechnet werden, dass alle Lüfter identisch angesteuert werden und somit zu dem Gesamtvolumenstrom mit einem zumindest im Wesentlichen gleichen Teilvolumenstrom beitragen. Aus dem über einen Lüfter gemessenen Differenzdruck kann also der von diesem Lüfter geförderte Teilvolumenstrom berechnet werden, welcher dann einfach mit der Anzahl der in der entsprechenden Lüfteranordnung vorhandenen Lüfter zu multiplizieren ist, um den von der Lüfteranordnung geförderten Gesamtvolumenstrom zu erhalten. Diese Berechnung ist jedenfalls im Normalbetrieb der Lüfteranordnung ausreichend und einfach zu realisieren.

Tritt jedoch bei einem der Lüfter eine Störung auf, ist die Annahme identischer Teilvolumenströme nicht mehr gerechtfertigt, so dass der berechnete Gesamtvolumenstrom nicht mehr dem tatsächlich geförderten Volumenstrom entspricht. Bei einem gestörten, im Stillstand befindlichen Lüfter tritt beispielsweise ein hydraulischer Kurzschluss in der Lüfteranordnuhg auf, bei dem von den funktionierenden Lüftern Luft von der Druckseite durch den gestörten Lüfter zur Saugseite "im Kreis" gefördert wird. Die Berechnung des geförderten Volumenstroms kann dann nicht mehr nach der zuvor beschriebenen Methode erfolgen, da sie zu falschen Werten führt. Der Druck im Raum kann dann nicht mehr konstant gehalten werden. Dies ist insbesondere für die im Raum befindlichen Personen unangenehm. Um dies zu verhindern, werden die Lüfteranordnungen einfach abgeschaltet.

Dies ist jedoch eine übertriebene Reaktion, da die Lüfteranordnung mit ihren ungestörten Lüftern durchaus noch mit verminderter Leistung betrieben werden kann. Voraussetzung hierfür ist, dass der von der gestörten Lüfteranordnung tatsächlich geförderte Volumenstrom bekannt ist. In diesem Fall kann die Volumenstromregelung weiter betrieben werden.

Die WO 2014/123044 A1 schlägt hierzu vor, einen in der beeinträchtigten Lüfteranordnung verbleibenden Lüfter so anzusteuern, dass ein Über- oder Unterdruck im Raum entsteht. Verwendet wird hierzu ein Temperatursensor.

Es ist Aufgabe der vorliegenden Erfindung eine gattungsgemäße Belüftungsanlage derart weiterzubilden, dass auch bei einem gestörten Betrieb eines Lüfters einer der Lüfteranordnungen der geförderte Volumenstrom zumindest näherungsweise ermittelt werden kann, ohne einen Volumenstromsensor oder Temperatursensor zu verwenden.

Diese Aufgabe wird durch ein Verfahren mit den Merkmalen des Anspruchs 1 und eine Belüftungsvorrichtung mit den Merkmalen des Anspruchs 17 gelöst. Weitere Vorteile und Merkmale der Erfindung sind in den jeweiligen Unteransprüchen angegeben.

Erfindungsgemäß wird ein Verfahren zum Betreiben einer Belüftungsanlage für einen Raum mit wenigstens zwei Luftkanälen vorgeschlagen, in denen jeweils eine Lüfteranordnung aus zwei oder mehr identisch angesteuerten Lüftern einliegt, wobei bei einer ersten dieser Lüfteranordnungen über wenigstens einen ihrer Lüfter ein Differenzdruck ermittelt und unter Verwendung dieses Differenzdrucks ein im Normalbetrieb von der ersten Lüfteranordnung geförderter Volumenstrom berechnet wird, wobei im Abstand zur ersten Lüfteranordnung ein Referenzdruck gemessen und aus diesem und dem von der ersten Lüfteranordnung geförderten Volumenstrom ein Referenzverhältnis zur Verwendung in einem gestörten Betrieb berechnet und abgespeichert wird, wobei das Referenzverhältnis aus dem Quotienten aus der Wurzel des Referenzdrucks zum berechneten Volumenstrom gebildet wird. Diese Berechnungsvorschrift ist besonders einfach und legt eine quadratische Abhängigkeit des Volumenstroms vom Druck in dem Lüftungskanal zugrunde.

Das Referenzverhältnis kann alternativ auch aus dem Quotienten aus dem Referenzdruck zum Quadrat des berechneten Volumenstroms gebildet sein. In diesem Fall ist der Ersatzvolumenstrom aus der Wurzel des Quotienten des Referenzdrucks zum berechneten Referenzverhältnis zu bilden.

Die Kernidee der vorliegenden Erfindung besteht darin, im Normalbetrieb der Belüftungsanlage einen Bezugswert zu ermitteln, der im Falle eines gestörten Betriebes der ersten Lüfteranordnung zur Verfügung steht, um den von der ersten Lüfteranordnung tatsächlich geförderten Volumenstrom abzuschätzen, zumindest näherungsweise zu ermitteln. Dies hat den Vorteil, dass eine Volumenstromregelung, die den geförderten Volumenstrom als Istwert benötigt, weiter betrieben werden kann. Hierzu wird im ungestörten Betrieb zusätzlich zu dem Differenzdruck über dem einen Lüfter der ersten Lüfteranordnung ein weiterer Druck, insbesondere in Absolutdruck, im Lüftungskanal verwendet, in dem die erste Lüfteranordnung einliegt, und ein Verhältnis zwischen diesem Druck und dem tatsächlich geförderten Volumenstrom ermittelt, welches dem genannten Bezugswert entspricht und hier als Referenzverhältnis bezeichnet wird. Durch die Abspeicherung des Referenzverhältnisses steht es sogleich zur Verfügung, wenn ein Fehler in der ersten Lüfteranordnung auftritt, d.h. ein gestörter Betrieb vorliegt. Ein Vorteil der Erfindung ist, dass die in einer Fan Wall aufgrund der Mehrzahl an Lüftern zur Erzeugung eines Gesamtluftstroms vorhandene Redundanz voll ausgenutzt werden kann.

Ein gestörter Betrieb kann beispielsweise der Ausfall eines Lüfters der ersten Lüfteranordnung sein, was durch eine fehlende Leistungsaufnahme ermittelbar ist. Andere Störungen können beispielsweise ein Überstrom, ein Leistungseinbruch oder Vibrationen an einem Lüfter sein, die durch entsprechende Messeinrichtungen festgestellt werden können. Hierzu können die Lüfter jeweils einen Meldekontakt aufweisen, die eine entsprechende Störmeldung abgeben. Demgegenüber wird unter Normalbetrieb im Sinne der Erfindung ein störungsfreier Betrieb verstanden.

Es sei angemerkt, dass das erfindungsgemäße Verfahren bei jeder der Lüfteranordnungen des Belüftungssystems angewendet werden kann, insbesondere unabhängig von der oder den anderen Lüfteranordnungen. So kann der Luftkanal, in dem die erste Lüfteranordnung einliegt, beispielsweise einen in den Raum mündenden Zuluftkanal bilden. D.h., dass die erste Lüfteranordnung dann Zuluft in den Raum befördert. Eine zweite Lüfteranordnung würde dann Abluft aus dem Raum heraus fördern. Derjenige Luftkanal, in dem diese zweite Lüfteranordnung einliegt, würde dann einen aus dem Raum führenden Abluftkanal bilden. In entsprechender Weise könnte jedoch die erste Lüfteranordnung auch Abluft aus dem Raum heraus fördern, d.h. in einem Abluftkanal einliegen. In diesem Fall wäre eine zweite Lüfteranordnung dann eine solche, die Zuluft in den Raum hinein fördert, d.h. die in einem Zuluftkanal einliegt. Die hier verwendeten Begriffe "erste" und "zweite" Lüfteranordnung geben daher nicht an, in welcher Richtung die Luftförderung erfolgt, jedoch bezeichnen diese Begriffe Lüfteranordnungen mit unterschiedlichen Förderrichtungen.

Die Regelung der ersten und/oder der zweiten Lüfteranordnung kann gemäß einer Volumenstromregelung erfolgen, wobei auf einen vorgegebenen Volumenstromsollwert geregelt wird. Dieser kann zumindest für die erste Lüfteranordnung manuell vorgegeben, insbesondere eingestellt werden.

Für die andere oder anderen Lüfteranordnungen der Belüftungsanlage kann ebenfalls eine Volumenstromregelung angewendet werden, wobei auch hier grundsätzlich eine manuelle Sollwertvorgabe erfolgen kann. Die beiden Sollwerte stehen je nach gewünschtem Druck im Raum in einem bestimmten Verhältnis bzw. einer Bilanz. Die erste Lüfteranordnung und die weitere oder weiteren Lüfteranordnungen wären dann getrennt voneinander volumenstromgeregelt.

Es ist jedoch auch möglich und sinnvoll, den von der ersten Lüfteranordnung geförderten Volumenstrom zu verwenden, um zumindest eine zweite der Lüfteranordnungen zu regeln, insbesondere so zu regeln, dass ein bestimmter Luftdruck im Raum gehalten wird. Selbst wenn dieser Luftdruck dem atmosphärischen Normaldruck entsprechen soll, ist zu berücksichtigen, dass die beiden geförderten Volumenströme beispielsweise aufgrund unterschiedlicher Lüftungskanäle nicht unbedingt gleich sein müssen. Wäre dies der Fall, so kann in einer einfachen Ausführungsvariante der von der ersten Lüfteranordnung geförderte Volumenstrom als Sollwert für die Volumenstromregelung der zumindest einen zweiten Lüfteranordnung verwendet werden. Wird jedoch die Bilanz zwischen den geförderten Volumenströmen berücksichtigt, so ergibt sich der Sollwert für die Volumenstromregelung der zumindest einen zweiten Lüfteranordnung aus dem Produkt des von der ersten Lüfteranordnung geförderten Volumenstroms und der für den notwendigen Druck erforderlichen Bilanz der Volumenströme.

Eine Sollwertvorgabe kann erfindungsgemäß sowohl nur im Normalbetrieb, als auch nur im gestörten Betrieb oder in beiden Betriebsfällen verwendet werden. So kann beispielsweise im Normalbetrieb eine autonome Regelung der Lüfteranordnungen mit jeweils eigenem Sollwert erfolgen, und im gestörten Betrieb auf eine abhängige Regelung umgeschaltet werden, bei der der Istwert der ersten Lüfteranordnung als Sollwert der zweiten Lüfteranordnung verwendet oder für die Berechnung eines Sollwerts für die zweite Lüfteranordnung verwendet wird. Die genannte abhängige Regelung kann zusätzlich aber auch im Normalbetrieb erfolgen.

Ein besonderer Vorteil des erfindungsgemäßen Verfahrens besteht darin, dass im Falle eines gestörten Betriebs eines der Lüfter der ersten Lüfteranordnung ein Ersatzvolumenstrom aus dem Referenzdruck und dem abgespeicherten Referenzverhältnis berechnet werden kann. Dieses Ersatzvolumen entspricht in guter Näherung dem tatsächlich von der ersten Lüfteranordnung geförderten Volumenstrom. Es kann daher als Istwert für die Volumenstromregelung der ersten Lüftungsanordnung verwendet werden.

Geeigneterweise kann der Ersatzvolumenstrom auch zur Regelung der zumindest einen zweiten Lüfteranordnung verwendet werden. Im einfachsten Fall kann er den Sollwert für eine Volumenstromregelung der zweiten Lüfteranordnung bilden. Dies ist insbesondere für den gestörten Betrieb der ersten Lüfteranordnung sinnvoll. In diesem Fall würde die zweite Lüfteranordnung auf die Förderung desselben Volumenstroms wie die erste Lüfteranordnung geregelt werden, so dass in dem Raum ein Normaldruck eingeregelt wird, d.h. weder ein Überdruck noch ein Unterdruck herrscht.

Ist jedoch das Verhältnis zwischen dem zu fördernden Zuluftvolumenstrom und dem zu fördernden Abluftvolumenstrom für den Erhalt eines bestimmten Drucks im Raum, insbesondere zum Erhalt atmosphärischen Normaldruck, nicht gleich eins, muss dieses Verhältnis beibehalten werden. Hierzu wird vorgeschlagen, den Ersatzvolumenstrom mit dem Verhältnis aus dem aktuellen Sollwert einer Volumenstromregelung der zweiten Lüfteranordnung zum Sollwert einer Volumenstromregelung der ersten Lüfteranordnung zu multiplizieren und dieses Produkt als neuen Sollwert für die Volumenstromregelung der zweiten Lüfteranordnung zu verwenden.

Der Ersatzvolumenstrom kann aber auch zur Regelung der zumindest einen zweiten Lüfteranordnung derart verwendet werden, dass in dem Raum ein bestimmter Druck ungleich dem Normaldruck erzeugt wird. In diesem Fall ist der Sollwert der Volumenstromregelung der ersten oder zweiten Lüfteranordnung nicht der Ersatzvolumenstrom sondern ein davon abweichender Sollvolumenstrom, der ebenfalls durch Multiplikation des Ersatzvolumenstroms mit der Bilanz aus den vorherigen Sollwerten ermittelt werden kann.

Der Abstand, in dem der Referenzdruck zur ersten Lüfteranordnung gemessen wird, sollte so bemessen sein, dass an der Messstelle eine laminare Strömung herrscht, d.h. keine oder zumindest wenig von der Lüfteranordnung erzeugte Turbulenzen auf die Druckmessung einwirken. Vorzugsweise wird der Referenzdruck in einem Abstand zwischen 1m und 5m von der ersten Lüfteranordnung gemessen.

Vorteilhafterweise wird der Referenzdruck stromabwärts gemessen. Dies bedeutet, dass die Messstelle in Strömungsrichtung hinter der Lüfteranordnung liegt, d.h. der druckseitige Druck gemessen wird. Dies führt zu genaueren Messwerten für die Berechnung des Ersatzvolumenstroms. Insbesondere kann die Messstelle am Ende des Luftkanals der ersten Lüfteranordnung liegen. Damit ist ein maximaler Abstand zwischen Messstelle und Lüfteranordnung erreicht, so dass minimale Störeinflüsse der Lüfteranordnung auf die Druckmessung wirken.

Gemäß einer vorteilhaften Weiterbildung des erfindungsgemäßen Verfahrens wird das Referenzverhältnis in Intervallen neu berechnet und abgespeichert. Versuche haben gezeigt, dass eine Neuberechnung und Abspeicherung alle 15 bis 60 Minuten, insbesondere alle 30 Minuten ausreicht. Das abgespeicherte Referenzverhältnis bildet somit stets den aktuellen Betriebszustand der Belüftungsanlage ab. Alternativ oder zusätzlich kann das Referenzverhältnis nach einer Änderung einer Sollwertvorgabe einer Volumenstromregelung der ersten Lüfteranordnung neu berechnet und abgespeichert werden. Da sich erst in diesem Fall an dem Betriebszustand der Belüftungsanlage etwas ändert, wird durch diese alternative Vorgehensweise der Rechenaufwand reduziert.

Idealerweise wird für die Berechnung des Ersatzvolumenstroms der aktuell gemessene Referenzdruck und das zuletzt abgespeicherte Referenzverhältnis verwendet. Hiermit wird erreicht, dass der im Störfall tatsächlich geförderte Volumenstrom so genau wie möglich berechnet wird.

Der Ersatzvolumenstrom kann beispielsweise aus dem Quotienten der Wurzel des Referenzdrucks zum berechneten Referenzverhältnis gebildet werden.

Tritt der Fall auf, dass alle Lüfter einer Lüfteranordnung in Störung gehen, d.h. beispielsweise ausfallen, kann keine sinnvolle Regelung mehr erfolgen. Um diesen Fall zu erkennen, kann eine Überwachung des gemessenen Referenzdrucks erfolgen. Vorzugsweise wird dann die erste Lüfteranordnung ausgeschaltet, wenn der Referenzkanaldruck einen vorgegebenen Minimalwert unterschreitet.

Wir bereits zuvor erwähnt, können die erste und die zweite Lüfteranordnung baulich und funktional identisch sein, so dass die Ausführungen zu der ersten Lüfteranordnung auch auf die zweite Lüfteranordnung und umgekehrt zutreffen. Entsprechend kann über wenigstens einen Lüfter der zweiten Lüfteranordnung ein Differenzdruck ermittelt und unter Verwendung dieses Differenzdrucks ein im Normalbetrieb von der zweiten Lüfteranordnung geförderter Volumenstrom berechnet werden, und im Abstand zur zweiten Lüfteranordnung ein zweiter Referenzdruck gemessen werden. Aus diesem und dem von der zweiten Lüfteranordnung geförderten Volumenstrom kann ein zweites Referenzverhältnis zur Verwendung in einem gestörten Betrieb der zweiten Lüfteranordnung berechnet und abgespeichert werden. Im Falle eines gestörten Betriebs eines der Lüfter der zweiten Lüfteranordnung kann ein zweiter Ersatzvolumenstrom aus dem zweiten Referenzdruck und dem abgespeicherten zweiten Referenzverhältnis berechnet wird. Dieser kann dann entsprechend der obigen Ausführungen zur Regelung der zweiten und/ oder der ersten Lüfteranordnung verwendet werden.

Von besonderer Bedeutung ist der Fall, dass sich sowohl die erste als auch die zweite Lüfteranordnung in einem gestörten Betrieb befinden. In diesem Fall ist kann von den Lüftungsanordnungen nur maximal der niedrigere der beiden geförderten Volumenströme gefördert werden. Es ist daher von Vorteil, wenn der erste und der zweite Ersatzvolumenstrom miteinander verglichen werden und der kleinere Ersatzvolumenstrom für die Volumenstromregelung der ersten und zweiten Lüfteranordnung verwendet wird.

Erfindungsgemäß wird auch eine Belüftungsanlage für einen Raum zur Durchführung des beschriebenen Verfahrens vorgeschlagen, umfassend wenigstens zwei Luftkanälen, in denen jeweils eine Lüfteranordnung aus zwei oder mehr Lüftern einliegt, einen Differenzdrucksensor zur Messung des über wenigstens einen Lüfter einer ersten der Lüfteranordnungen aufgebauten Differenzdrucks, eine Recheneinheit zur Berechnung eines im Normalbetrieb von der ersten Lüfteranordnung geförderten Volumenstroms unter Verwendung des Differenzdrucks, weiter umfassen einen im Abstand zur ersten Lüfteranordnung angeordneten Drucksensor zur Messung eines Referenzdruck , wobei die Recheneinheit oder eine zweite Recheneinheit dazu eingerichtet ist, aus dem Referenzdruck unter Verwendung des berechneten Volumenstroms ein Referenzverhältnis zu bestimmen und abzuspeichern, dass in einem gestörten Betrieb zur Verfügung steht.

Es sei angemerkt, dass die Belüftungsanlage die zuvor zu dem erfindungsgemäßen Verfahren beschriebenen Merkmale aufweist, soweit sie zur Durchführung des Verfahrens notwendig oder zumindest vorteilhaft sind. Insbesondere kann die Belüftungsanlage dazu eingerichtet sein, im Falle eines gestörten Betriebs eines der Lüfter der ersten Lüfteranordnung ein Ersatzvolumenstrom aus dem Referenzdruck und dem abgespeicherten Referenzverhältnis zu berechnen. Dieser Ersatzvolumenstrom entspricht dann näherungsweise dem von der ersten Lüfteranordnung geförderten Volumenstrom.

Vorzugsweise weist die Belüftungsanlage eine Regelungseinheit zur Regelung zumindest einer zweiten der Lüfteranordnungen auf, die den Ersatzvolumenstrom zur Regelung der zweiten Lüfteranordnung verwendet. Dies kann ebenfalls entsprechend dem vorbeschriebenen Verfahren erfolgen, wobei der Ersatzvolumenstrom als Sollwert für eine Volumenstromregelung der zweiten Lüfteranordnung verwendet werden kann, damit beide Lüfteranordnungen im Wesentlichen denselben Volumenstrom fördern.

Weitere Vorteile und Merkmale des erfindungsgemäßen Verfahrens und der erfindungsgemäßen Belüftungsanlage werden nachfolgend anhand eines Ausführungsbeispiels und der beigefügten Figur näher erläutert.

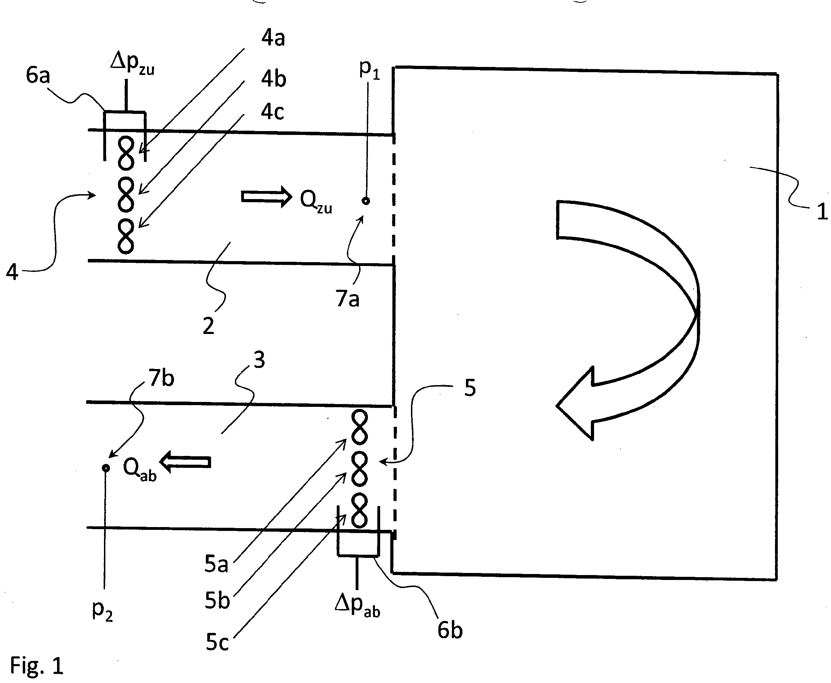

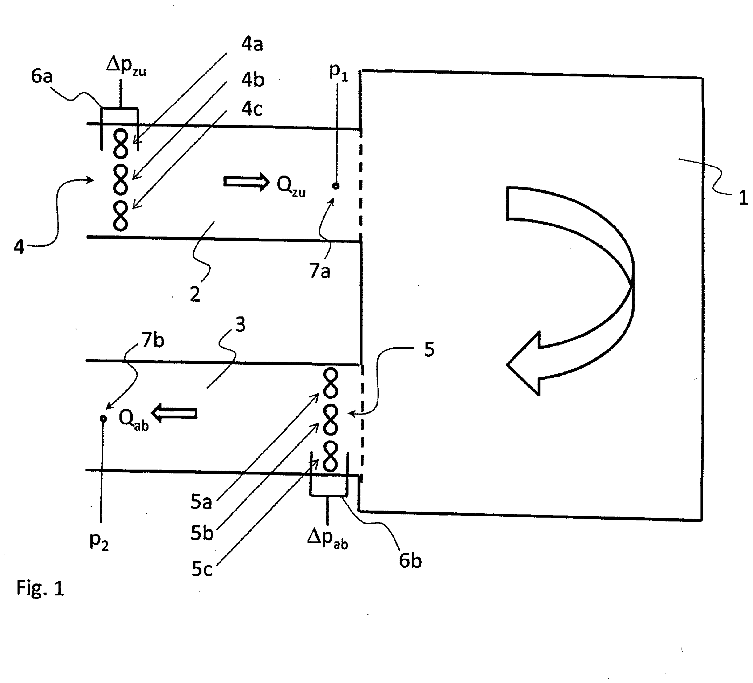

Figur 1 zeigt ein schematisches Beispiel einer erfindungsgemäßen Belüftungsanlage für einen Raum 1. Sie umfasst in diesem Beispiel einen in den Raum 1 mündenden Zuluftkanal 2 und einen aus dem Raum 1 heraus führenden Abluftkanal 3. Es sei jedoch angemerkt, dass die Belüftungsanlage auch mehr als einen Zuluftkanal und/ oder mehr als einen Abluftkanal aufweisen kann.

In jedem der zwei Luftkanäle 2, 3, ist jeweils eine Lüfteranordnung 4, 5 angeordnet, die hier rein beispielhaft jeweils als aus drei Lüftern 4a, 4b, 4c, 5a, 5b, 5c bestehend dargestellt ist. Die Lüfteranordnungen 4, 5 können jeweils jedoch auch nur zwei Lüfter oder mehr als drei Lüfter umfassen, beispielsweise 9 (3x3) oder 16 (4x4). Die Lüfter sind drehzahlgeregelt und können beispielsweise von elektronisch kommutierten Motoren (EC-Lüfter) angetrieben sein.

Jeder Lüfter 4a, 4b, 4c, 5a, 5b, 5c verfügt über eine eigene Steuerungselektronik, die den jeweiligen Lüfter 4a, 4b, 4c, 5a, 5b, 5c über ein externes Freigabesignal aktivieren und deaktivieren sowie in seiner Drehzahl regeln kann. Die Steuerungselektronik kann ferner eine Störungserkennung und Störungsmeldung für den jeweiligen Lüfter aufweisen. Diese kann beispielsweise im Falle einer Störung ein Störungssignal ausgeben oder einen Störungskontakt auslösen. Die Drehzahlregelung setzt eine Volumenstromregelung um, die zu einem vorgegebenen Volumenstromsollwert eine Solldrehzahl beispielsweise durch ein 0-10V Signal oder ein Frequenzsignal für einen Frequenzumrichter ausgibt. Der Frequenzumrichter kann ebenfalls Teil der Steuerungselektronik des jeweiligen Lüfters sein.

Um den Aufwand der Ansteuerung, insbesondere der Verkabelung gering zu halten, werden alle Lüfter derselben Lüfteranordnung 4, 5 identisch angesteuert. Dies bedeutet, dass einer Lüfteranordnung nur ein Steuersignal zugeführt wird und alle Lüfter einer Lüfteranordnung 4, 5 mit demselben Steuersignal angesteuert werden, wobei das Steuersignal einem vorgegebenen Volumenstromsollwert entspricht. In gleicher Weise werden alle Lüfter derselben Lüfteranordnung 4, 5 mit nur einem Freigabesignal angesteuert. Dies hat zur Folge, dass nur alle Lüfter gemeinsam oder gar nicht betrieben werden können. Ferner sind alle Störungserkennungen der Lüfter an eine gemeinsame Störungsleitung angeschlossen, beispielsweise derart, dass alle Störungskontakte in Reihe liegen. Dies bedeutet, dass die Auslösung eines einzigen Störungskontaktes eine Störung auf der Störungsleitung angibt, jedoch nicht bekannt ist, welcher Lüfter sich in Störung befindet.

Die Lüfteranordnungen 4, 5 sind im Wesentlichen identisch aufgebaut, so dass die technische Beschreibung der einen Lüfteranordnung 4 auch auf die andere Lüfteranordnung 5 zutrifft. Nachfolgend wird der Zuluft führende Luftkanal 2 als erster Luftkanal 2 und die darin angeordnete Lüfteranordnung 4 als erste Lüfteranordnung 4 bezeichnet. Entsprechend wird der Abluft führende Luftkanal 3 als zweiter Luftkanal 3 und die darin angeordnete Lüfteranordnung 5 als erste Lüfteranordnung 5 bezeichnet. Aufgrund des identischen Aufbaus können die erste und die zweite Lüfteranordnung 4, 5 aber auch gegeneinander vertauscht werden, ohne von der erfindungsgemäße Lehre abzuweichen.

Bei der ersten Lüfteranordnung 4 weist einer ihrer Lüfter 4a einen Differenzdrucksensor 6a auf, der den über diesen Lüfter 4a erzeugten Differenzdruck $\Delta p_{zu}$ misst. Unter Verwendung dieses Differenzdrucks $\Delta p_{zu}$ wird der im Normalbetrieb von der ersten Lüfteranordnung 4 geförderte Volumenstrom $Q_{zu}$ berechnet.

Dies erfolgt unter Verwendung des bekannten Zusammenhangs zwischen Differenzdruck und Volumenstrom an dem einen Lüfter 4a, der vom Lüfterhersteller beispielsweise in Gestalt einer Tabelle mit numerischen Werten, einem $\Delta$p-Q Diagramm oder als approximierte Gleichung angegeben wird. Rein qualitativ lässt sich der mathematische Zusammenhang im einfachsten Fall durch eine quadratische Abhängigkeit des Drucks $\Delta$p vom Volumenstrom Q beschreiben, beispielsweise als $\Delta p = k \cdot Q^2$ oder $Q = k \cdot sqrt(\Delta p)$, dabei ist k ein für einen bestimmten Lüftertyp konstanter Faktor, der vom Lüfterhersteller angegeben wird und im Falle der zweiten angegebenen Gleichung typischerweise zwischen 50 und 1000 liegt. Der von dem einen Lüfter 4a geförderte Volumenstrom ist allerdings nur ein Teilvolumenstrom. Da alle Lüfter baulich identisch sind, wird dieser Teilvolumenstrom mit der Anzahl der Lüfter multipliziert, um den von der ersten Lüfteranordnung 4 geförderten Gesamtvolumenstrom $Q_{zu}$ zu erhalten.

Der Vorteil von mehreren Lüftern in einer Lüfteranordnung 4, 5 zur Erzeugung eines Luftstroms besteht darin, dass bei einem Ausfall eines Lüfters die Belüftungsanlage noch mit dem anderen Lüftern der Lüfteranordnung weiter betrieben werden kann, insbesondere in einer Art Notbetrieb. Wird die Lüfteranordnung 4, 5 jedoch mittels einer Volumenstromregelung geregelt, ist die beschriebene Differenzdruckmessung im Störfall, d.h. bei Ausfall eines Lüfters wertlos. Denn ein Teil der geförderten Luft wird über den ausgefallenen Lüfter kurzgeschlossen. Hierdurch kann es zu einem unkontrollierbaren Druck im Raum 1, insbesondere zu einem Überdruck oder Unterdruck kommen, weil nicht bekannt ist, wie viel Luft aus dem Raum 1 abgeführt werden muss, wenn die Zuluft-Lüfteranordnung 4 gestört ist, bzw. wie viel Luft in den Raum 1 eingebracht werden muss, wenn die Abluft-Lüfteranordnung 5 gestört ist.

Um dies zu verhindern und den geförderten Volumenstrom im Zuluftkanal 2 auch im Störfall, d.h. bei Ausfall eines Lüfters 4a, 4b, 4c zumindest näherungsweise zu bestimmen, wird im Abstand zur ersten Lüfteranordnung 4 ein Referenzdruck $p_1$ gemessen. Hierzu ist ein Drucksensor 7a vorgesehen, der beispielhaft stromabwärts am Ende des Zuluftkanals 2, d.h. in Strömungsrichtung hinter der ersten Lüfteranordnung angeordnet ist. Er könnte grundsätzlich auch stromaufwärts, d.h. vor der ersten Lüfteranordnung vorgesehen sein. Jedoch wird die Zuluft-Lüfteranordnung 4 häufig unmittelbar am Anfang des Zuluftkanals 2, beispielsweise außerhalb des den Raum umfassenden Gebäudes aufgestellt, so dass es keinen Bereich vor der Lüfteranordnung gibt. Demgegenüber kann jedoch die Anordnung eines entsprechenden Drucksensors 7b im Abluftkanal 3 vor der zweiten Lüfteranordnung 5 liegen, sofern auch diese unmittelbar am Ende des Abluftkanals 3 angeordnet ist. Denn in diesem Fall besteht keine Möglichkeit, den Drucksensor 7b hinter der zweiten Lüfteranordnung anzuordnen.

Die Messstelle für den Drucksensor 7a, 7b ist derart beabstandet zu der entsprechenden Lüfteranodnung 4, 5, dass Rückwirkungen der Lüfteranordnung 4, 5, insbesondere Turbulenzen an der Messstelle minimal sind und eine weitgehend laminare Strömung vorherrscht. Der Abstand ist abhängig von der Größe der Lüfteranordnung respektive der Anzahl der Lüfter, so kann bei kleinen Lüfteranordnungen mit beispielsweise drei Lüftern ein Abstand von 1m ausreichen, während bei großen Lüfteranordnungen mit 3x3 oder 4x4 Lüftern ein Abstand von 3m bis 5m erforderlich ist.

Aus dem von dem Drucksensor 7a gemessenen Referenzdruck $p_1$ und dem berechneten, von der ersten Lüfteranordnung 4 geförderten Volumenstrom $Q_{zu}$ wird ein Referenzverhältnis $\delta_{normal}$ berechnet und anschließend abgespeichert, so dass es zur späteren Verwendung in einem gestörten Betrieb der ersten Lüfteranordnung 4 zur Verfügung steht. Die Berechnung erfolgt nach folgendem mathematischen Zusammenhang

$$\delta_{normal} = \frac{\sqrt{p_1}}{Q_{zu}},$$

wobei $\delta_{normal}$ das Referenzverhältnis für den Zuluftkanal 2, $p_1$ der Referenzdruck für den Zuluftkanal 2 und $Q_{zu}$ der von der ersten Lüfteranordnung 4 geförderte, berechnete Volumenstrom ist. Das Referenzverhältnis $\delta_{normal}$ wird folglich aus dem Quotienten aus der Wurzel des Referenzdrucks $p_1$ zum berechneten Volumenstrom $Q_{zu}$ gebildet.

Sofern nun ein Störfall bei der ersten Lüfteranordnung eintritt, wird aus dem gemessenen Referenzdruck $p_1$ und dem abgespeicherten Referenzverhältnis $\delta_{normal}$ ein Ersatzvolumenstrom $Q_{ST}$ berechnet. Dies erfolgt unter Verwendung desselben mathematischen Zusammenhangs, wie zuvor das Referenzverhältnis ermittelt worden ist, wobei lediglich der berechnete Zuluftvolumenstrom durch den Ersatzvolumenstrom ersetzt ist. Die Berechnung erfolgt nach folgendem mathematischen Zusammenhang

$$Q_{ST} = \frac{\sqrt{p_1}}{\delta_{normal}},$$

wobei $\delta_{normal}$ das Referenzverhältnis, $p_1$ der Referenzdruck und $Q_{ST}$ der von der ersten Lüfteranordnung 4 geförderte, geschätzte Volumenstrom ist. Der Ersatzvolumenstrom $Q_{ST}$ wird folglich aus dem Quotienten der Wurzel des Referenzdrucks $p_1$ zum berechneten Referenzverhältnis $\delta_{normal}$ gebildet.

Der Ersatzvolumenstrom $Q_{ST}$ kann nun für die Volumenstromregelung der ersten Lüfteranordnung 4 verwendet werden, indem er als Istwert für die Volumenstromregelung fungiert. Ferner kann der Ersatzvolumenstrom $Q_{ST}$ für die Volumenstromregelung der zweiten Lüfteranordnung 5 verwendet werden. Hierbei ist es wichtig, dass die zuvor bestehende Bilanz zwischen dem Zuluftvolumenstrom und dem Abluftvolumenstrom bestehen bleibt. Um dies zu erreichen wird der Ersatzvolumenstrom $Q_{ST}$ mit dem Verhältnis aus dem aktuellen Sollwert $Q_{soll\_ab}$ einer Volumenstromregelung der zweiten Lüfteranordnung 5 zum Sollwert $Q_{soll\_zu}$ einer Volumenstromregelung der ersten Lüfteranordnung 4 multipliziert und als neuer Sollwert $Q_{soll\_ab\_neu}$ für die Volumenstromregelung der zweiten Lüfteranordnung 5 verwendet:

$$Q_{soll\_ab\_neu} = \frac{Q_{soll\_ab}}{Q_{soll\_zu}} \cdot Q_{ST}$$

In diesem Fall ist sichergestellt, dass sich im Raum 1 auch in einem Störbetrieb kein Über- oder Unterdruck einstellt.

Wie in der Figur 1 dargestellt, sind die erste und zweite Lüfteranordnung prinzipiell baugleich. Auch diese besteht aus drei identisch angesteuerten Lüftern 5a, 5b, 5c, wobei einem dieser Lüfter 5c ein Differenzdrucksensor 6b zugeordnet ist, um den Differenzdruck $\Delta p_{ab}$ über diesen Lüfter 5c zu messen. Mit den entsprechenden Herstellerangaben kann dann wie zuvor beschrieben aus dem Differenzdruck $\Delta p_{ab}$ der von diesem Lüfter 5c geförderte Teilvolumenstrom berechnet werden. Multipliziert mit der Anzahl der Lüfter der zweiten Lüfteranordnung 5 ergibt sich dann der von der zweiten Lüfteranordnung geförderte 5 Gesamtvolumenstrom $Q_{ab}$.

Auch bei der zweiten Lüfteranordnung 5 wird im Abstand zu dieser ein Referenzdruck $p_2$ gemessen. Hierzu dient ein zweiter Drucksensor 7b, der in Strömungsrichtung hinter der zweiten Lüfteranordnung angeordnet ist. Aus diesem zweiten Referenzdruck $p_2$ und dem von der zweiten Lüfteranordnung 5 geförderten, berechneten Volumenstrom $Q_{ab}$ wird ein zweites Referenzverhältnis $\delta_{normal\_ab}$ berechnet und abgespeichert. Die Berechnung erfolgt mit der Gleichung

$$\delta_{normal,\_ab} = \frac{\sqrt{p_2}}{Q_{ab}}$$

wobei $\delta_{normal\_ab}$ das Referenzverhältnis für den Abluftkanal 3, $p_2$ der Referenzdruck im Abluftkanal 3 und $Q_{ab}$ der von der zweiten Lüfteranordnung 4 geförderte, berechnete Volumenstrom ist.

Sofern nun ein Störfall bei der zweiten Lüfteranordnung 5 eintritt, wird aus dem gemessenen zweiten Referenzdruck $p_2$ und dem abgespeicherten zweiten Referenzverhältnis $\delta_{normal\_ab}$ ein Ersatzvolumenstrom $Q_{ST\_ab}$ berechnet. Dies erfolgt unter Verwendung desselben mathematischen Zusammenhangs, wie zuvor das zweite Referenzverhältnis $\delta_{normal\_ab}$ für den Abluftkanal 3 ermittelt worden ist, wobei lediglich der berechnete Abluftvolumenstrom $Q_{ab}$ durch den Ersatzvolumenstrom $Q_{ST\_ab}$ ersetzt ist. Die Berechnung erfolgt nach folgendem mathematischen Zusammenhang

$$Q_{ST,ab} = \frac{\sqrt{p_2}}{\delta_{normal\_ab}},$$

wobei $\delta_{normal\_ab}$ das zweite Referenzverhältnis für den Abluftkanal 3, $p_2$ der zweite Referenzdruck und $Q_{ST\_ab}$ der zweite Ersatzvolumenstrom, d.h. der von der zweiten Lüfteranordnung 5 geförderte, geschätzte Volumenstrom ist. Der zweite Ersatzvolumenstrom $Q_{ST\_ab}$ wird folglich aus dem Quotienten der Wurzel des zweiten Referenzdrucks $p_2$ zum berechneten zweiten Referenzverhältnis $\delta_{normal\_ab}$ im Abluftkanal 3 gebildet.

Der zweite Ersatzvolumenstrom $Q_{ST\_ab}$ wird in einem gestörten Betrieb eines der Lüfter 5a, 5b, 5c der zweiten Lüfteranordnung 5 für ihre Volumenstromregelung verwendet, wobei er als Volumenstrom-Istwert fungiert. Ferner wird er in diesem Fall auch zur Regelung der ersten Lüfteranordnung verwendet.

Um die Luftbilanz zwischen Zuluft und Abluft beizubehalten, wird der zweite Ersatzvolumenstrom $Q_{ST\_ab}$ mit dem Verhältnis aus dem aktuellen Sollwert $Q_{soll\_zu}$ einer Volumenstromregelung der ersten Lüfteranordnung 4 zum Sollwert $Q_{soll\_ab}$ einer Volumenstromregelung der zweiten Lüfteranordnung 5 multipliziert und als neuer Sollwert $Q_{soll\_zu\_neu}$ für die Volumenstromregelung der ersten Lüfteranordnung 4 verwendet, jedenfalls sofern kein Lüfter der ersten Lüfteranordnung 4 in Störung steht:

$$Q_{soll\_zu\_neu} = \frac{Q_{soll\_zu}}{Q_{soll\_ab}} \cdot Q_{ST\_ab}.$$

In diesem Fall ist sichergestellt, dass sich im Raum 1 auch in einem Störbetrieb der zweiten Lüfteranordnung 5 kein Über- oder Unterdruck einstellt.

Wenn beide Luftströme eine Störung je eines Lüfters haben, wird der niedrigste berechnete Ersatzvolumenstrom $Q_{ST}$, $Q_{ST\_ab}$ verwendet, um den Luftstrom der anderen Lüfteranordnung mit dem höheren Ersatzvolumenstrom runter zu regeln. Es werden dann der erste und der zweite Ersatzvolumenstrom $Q_{ST}$, $Q_{ST\_ab}$ miteinander verglichen und der kleinere Ersatzvolumenstrom $Q_{ST}$, $Q_{ST\_ab}$ für die Volumenstromregelung der ersten und zweiten Lüfteranordnung 4, 5 wie zuvor beschrieben, verwendet.

Die Berechnung des Referenzverhältnisses erfolgt alle 30 Minuten, so dass es stets den aktuellen Betriebsstatus der Belüftungsanlage berücksichtigt. Für die Berechnung des ersten und/ oder zweiten Ersatzvolumenstroms $Q_{ST}$, $Q_{ST\_ab}$ wird dann immer der aktuell gemessene Referenzdruck $p_1$, $p_2$ in dem entsprechenden Kanal 2, 3 und der zuletzt gespeicherte Wert für das Referenzverhältnis $\delta_{normal}$, $\delta_{normal\_an}$ verwendet. Somit ist sichergestellt, dass auch der Ersatzvolumenstrom stets in guter Näherung dem tatsächlich geförderten Volumenstrom in dem entsprechenden Kanal 2, 3 entspricht.

Zusammengefasst sieht die vorliegende Erfindung vor, durch zusätzliche Drucksensoren 7a, 7b, die im Zuluftkanal 2 bzw. im Abluftkanal 3 zu montieren sind, ein Verhältnis zwischen dem jeweiligen Kanaldruck $p_1$, $p_2$ und seinem Volumenstrom $Q_{zu}$, $Q_{ab}$ zu bestimmen, woraus sich auch bei einem Lüfterausfall der Volumenstrom der Zuluft bzw. Abluft bestimmen und regeln lässt. Da man bei einer Volumenstromregelung davon ausgehen kann, dass der Druck im Kanal in einem konstanten Verhältnis mit dem Volumenstrom steht, kann man dieses Verhältnis benutzen, um bei einem Ausfall von einem Lüfter den Volumenstrom zu berechnen. Auf Basis des gemessenen Kanaldrucks $p_1$, $p_2$ und dem zuletzt gespeicherten Referenzverhältnis $\delta_{normal}$, $\delta_{normal\_ab}$ zwischen Volumenstrom und Kanaldruck kann dann der aktuelle Volumenstrom berechnet werden. Wichtig dabei ist, dass dieses Verhältnis im Betrieb ständig gespeichert, d.h. aktualisiert wird. Dies erfolgt erfindungsgemäß im Regler alle 30 Minuten so dass stets ein aktuelles Referenzverhältnis bei Eintritt einer Störung vorliegt und verwendet werden kann. Der berechnete Ersatzvolumenstrom kann dann für die Volumenstromregelung der anderen Lüfteranordnung verwendet werden, um deren Luftstrom in Bilanz mit dem Luftstrom der gestörten Lüfteranordnung zu halten.

**Patentansprüche**

1. Verfahren zum Betreiben einer Belüftungsanlage für einen Raum (1) mit wenigstens zwei Luftkanälen (2, 3), in denen jeweils eine Lüfteranordnung (4, 5) aus zwei oder mehr identisch angesteuerten Lüftern ([4a, 4b, 4c], [5a, 5b, 5c]) einliegt, wobei bei einer ersten dieser Lüfteranordnungen (4) über wenigstens einen ihrer Lüfter (4a) ein Differenzdruck ($\Delta p_{zu}$) ermittelt und unter Verwendung dieses Differenzdrucks ($\Delta p_{zu}$) ein im Normalbetrieb von der ersten Lüfteranordnung (4) geförderter Volumenstrom ($Q_{zu}$) berechnet wird, wobei im Abstand zur ersten Lüfteranordnung (4) ein Referenzdruck ($p_1$) gemessen und aus diesem und dem von der ersten Lüfteranordnung (4) geförderten Volumenstrom ($Q_{zu}$) ein Referenzverhältnis ($\delta_{normal}$) zur Verwendung in einem gestörten Betrieb der ersten Lüfteranordnung (4) berechnet und abgespeichert wird, **dadurch gekennzeichnet, dass** das Referenzverhältnis ($\delta_{normal}$) aus dem Quotienten aus der Wurzel des Referenzdrucks ($p_1$) zum berechneten Volumenstrom ($Q_{zu}$) oder aus dem Quotienten aus dem Referenzdruck ($p_1$) zum Quadrat des berechneten Volumenstroms ($Q_{zu}$) gebildet wird.

2. Verfahren nach Anspruch 1, **dadurch gekennzeichnet, dass** im Falle eines gestörten Betriebs eines der Lüfter (4a, 4b, 4c) der ersten Lüfteranordnung (4) ein Ersatzvolumenstrom ($Q_{ST}$) aus dem Referenzdruck ($p_1$) und dem abgespeicherten Referenzverhältnis ($\delta_{normal}$) berechnet wird.

3. Verfahren nach Anspruch 2, **dadurch gekennzeichnet, dass** der Ersatzvolumenstrom ($Q_{ST}$) als Istwert für eine Volumenstromregelung der ersten Lüfteranordnung (5) verwendet wird.

4. Verfahren nach einem der vorherigen Ansprüche, **dadurch gekennzeichnet, dass** der Referenzdruck ($p_1$) in einem Abstand zwischen 1m und 5m von der ersten Lüfteranordnung (4) gemessen wird.

5. Verfahren nach einem der vorherigen Ansprüche, **dadurch gekennzeichnet, dass** der Referenzdruck ($p_1$) strom-

abwärts, insbesondere am Ende des Luftkanals (2) der ersten Lüfteranordnung (4) gemessen wird.

6. Verfahren nach einem der vorherigen Ansprüche, **dadurch gekennzeichnet, dass** das Referenzverhältnis ($\delta_{normal}$) in Intervallen, insbesondere alle 15-60 Minuten, vorzugsweise alle 30 Minuten, neu berechnet und abgespeichert wird.

7. Verfahren nach einem der vorherigen Ansprüche, **dadurch gekennzeichnet, dass** das Referenzverhältnis ($\delta_{normal}$) nach einer Änderung einer Sollwertvorgabe einer Volumenstromregelung der ersten Lüfteranordnung (4) neu berechnet und abgespeichert wird.

8. Verfahren nach Anspruch 6 oder 7, **dadurch gekennzeichnet, dass** für die Berechnung des Ersatzvolumenstroms ($Q_{ST}$) der aktuell gemessenen Referenzdruck ($p_1$) und das zuletzt abgespeicherte Referenzverhältnis ($\delta_{normal}$) verwendet wird.

9. Verfahren nach einem der Ansprüche 2 bis 8, **dadurch gekennzeichnet, dass** der Ersatzvolumenstrom ($Q_{ST}$) aus dem Quotienten der Wurzel des Referenzdrucks ($p_1$) zum berechneten Referenzverhältnis ($\delta_{normal}$) oder aus der Wurzel des Quotienten des Referenzdrucks ($p_1$) zum berechneten Referenzverhältnis ($\delta_{normal}$) gebildet wird.

10. Verfahren nach einem der vorherigen Ansprüche, **dadurch gekennzeichnet, dass** die erste Lüfteranordnung (4) ausgeschaltet wird, wenn der Referenzkanaldruck ($p_1$) einen vorgegebenen Minimalwert unterschreitet.

11. Verfahren nach einem der vorherigen Ansprüche, **dadurch gekennzeichnet, dass** einer der zumindest zwei Luftkanäle (2, 3) ein in den Raum (1) mündender Zuluftkanal (2) und der andere Luftkanal (3) ein aus dem Raum (1) führender Abluftkanal (3) bildet, wobei die erste Lüfteranordnung (4) in einem der Luftkanäle (2, 3) und eine zweite Lüfteranordnung (5) aus zwei oder mehr identisch angesteuerten Lüftern (5a, 5b, 5c) in dem anderen Luftkanal (3) einliegt.

12. Verfahren nach Anspruch 11, **dadurch gekennzeichnet, dass** der Ersatzvolumenstrom ($Q_{ST}$) zur Regelung der zweiten Lüfteranordnung (5) verwendet wird.

13. Verfahren nach Anspruch 11 oder 12, **dadurch gekennzeichnet, dass** der Ersatzvolumenstrom ($Q_{ST}$) im gestörten Betrieb der ersten Lüfteranordnung (4) den neuen Sollwert ($Q_{soll\_ab\_neu}$) einer Volumenstromregelung der zweiten Lüfteranordnung (5) bildet.

14. Verfahren nach Anspruch 11, 12 oder 13, **dadurch gekennzeichnet, dass** der Ersatzvolumenstrom ($Q_{ST}$) multipliziert mit dem Verhältnis aus dem aktuellen Sollwert ($Q_{soll\_ab}$) einer Volumenstromregelung der zweiten Lüfteranordnung (5) zum Sollwert ($Q_{soll\_zu}$) einer Volumenstromregelung der ersten Lüfteranordnung (4) als neuer Sollwert ($Q_{soll\_ab\_neu}$) für die Volumenstromregelung der zweiten Lüfteranordnung (5) verwendet wird.

15. Verfahren nach einem der Ansprüche 11 bis 14, **dadurch gekennzeichnet, dass** über wenigstens einen Lüfter (5c) der zweiten Lüfteranordnung (5) ein Differenzdruck ($\Delta p_{ab}$) ermittelt und unter Verwendung dieses Differenzdrucks ($\Delta p_{ab}$) ein im Normalbetrieb von der zweiten Lüfteranordnung (5) geförderter Volumenstrom ($Q_{ab}$) berechnet wird, und im Abstand zur zweiten Lüfteranordnung (5) ein zweiter Referenzdruck ($p_2$) gemessen und aus diesem und dem von der zweiten Lüfteranordnung (5) geförderten Volumenstrom ($Q_{ab}$) ein zweites Referenzverhältnis ($\delta_{normal\_ab}$) zur Verwendung in einem gestörten Betrieb der zweiten Lüfteranordnung (5) berechnet und abgespeichert wird, wobei im Falle eines gestörten Betriebs eines der Lüfter (5a, 5b, 5c) der zweiten Lüfteranordnung (4) ein zweiter Ersatzvolumenstrom ($Q_{ST\_ab}$) aus dem zweiten Referenzdruck ($p_2$) und dem abgespeicherten zweiten Referenzverhältnis ($\delta_{normal\_ab}$) berechnet wird.

16. Verfahren nach Anspruch 15, **dadurch gekennzeichnet, dass** wenn sich die erste und die zweite Lüfteranordnung (4, 5) beide in einem gestörten Betrieb befinden, der erste und der zweite Ersatzvolumenstrom ($Q_{ST}$, $Q_{ST\_ab}$) miteinander verglichen werden und der kleinere Ersatzvolumenstrom ($Q_{ST}$, $Q_{ST\_ab}$) für die Volumenstromregelung der ersten und zweiten Lüfteranordnung (4, 5) verwendet wird.

17. Belüftungsanlage für einen Raum (1) zur Durchführung des Verfahrens nach einem der vorherigen Ansprüche, umfassend

    - wenigstens zwei Luftkanälen (2, 3), in denen jeweils eine Lüfteranordnung (4, 5) aus zwei oder mehr Lüftern ([4a, 4b, 4c], [5a, 5b, 5c]) einliegt,
- einen Differenzdrucksensor (6a) zur Messung des über wenigstens einen Lüfter (4a) einer ersten der Lüfter-anordnungen (4) aufgebauten Differenzdrucks ($\Delta p_{zu}$),
- eine Recheneinheit zur Berechnung eines im Normalbetrieb von der ersten Lüfteranordnung (4) geförderten Volumenstroms (Qzu) unter Verwendung des Differenzdrucks ($\Delta p_{zu}$)

wobei einen im Abstand zur ersten Lüfteranordnung (4) angeordneten Drucksensor (7a) zur Messung eines Referenzdruck ($p_1$), wobei die Recheneinheit oder eine zweite Recheneinheit dazu eingerichtet ist, aus dem Referenzdruck ($p_1$) unter Verwendung des berechneten Volumenstroms (Qzu) ein Referenzverhältnis ($\delta_{normal}$) zu bestimmen und abzuspeichern, dass in einem gestörten Betrieb zur Verfügung steht, **dadurch gekennzeichnet, dass** das Referenzverhältnis ($\delta_{normal}$) aus dem Quotienten aus der Wurzel des Referenzdrucks ($p_1$) zum berechneten Volumenstrom (Qzu) oder aus dem Quotienten aus dem Referenzdruck ($p_1$) zum Quadrat des berechneten Volumenstroms (Qzu) gebildet ist.

18. Belüftungsanlage nach Anspruch 17, **dadurch gekennzeichnet, dass** sie dazu eingerichtet ist, im Falle eines gestörten Betriebs eines der Lüfter (4a, 4b, 4c) der ersten Lüfteranordnung (4) ein Ersatzvolumenstrom ($Q_{ST}$) aus dem Referenzdruck ($p_1$) und dem abgespeicherten Referenzverhältnis ($\delta_{normal}$) zu berechnen.

19. Belüftungsanlage nach Anspruch 18, **dadurch gekennzeichnet, dass** sie eine Regelungseinheit zur Regelung der ersten und/ oder zumindest einer zweiten der Lüfteranordnungen (5) aufweist, wobei die Regelungseinheit den Ersatzvolumenstrom ($Q_{ST}$) zur Regelung der ersten und/ oder zweiten Lüfteranordnung (4, 5) verwendet.

**Claims**

1. Method for the operation of a ventilation system for a room (1) with at least two air ducts (2, 3), respectively with an integrated fan unit (4, 5) comprising two or more identically controlled fans ([4a, 4b, 4c], [5a, 5b, 5c]), in which for one of the first of these fan units (4), via at least one of its fans (4a), a differential pressure ($\Delta p_{zu}$) is determined and, using this differential pressure ($\Delta p_{zu}$),a volume flow (Qzu) transported by the first fan unit (4) in normal operation is calculated, in which a reference pressure ($p_1$) is measured at a distance from the first fan unit (4) and, from this and the volume flow (Qzu) transported by the first fan unit (4), a reference ratio ($\delta_{normal}$) is calculated and stored for use in case of faulty operation of the first fan unit (4), **characterised by** the reference ratio ($\delta_{normal}$) being formed as the quotient of the root of the reference pressure (pi) and the calculated volume flow (Qzu) or as the quotient of the reference pressure ($p_1$) and the square of the calculated volume flow (Qzu).

2. Method according to claim 1, **characterised by** a substitute volume flow ($Q_{ST}$) being calculated from the reference pressure ($p_1$) and the stored reference ratio ($\delta_{normal}$) in case of faulty operation of one of the fans (4a, 4b, 4c) of the first fan unit (4).

3. Method according to claim 2, **characterised by** the substitute volume flow ($Q_{ST}$) being used as the current value for volume flow control of the first fan unit (5).

4. Method according to one of the preceding claims, **characterised by** the reference pressure ($p_1$) being measured at a distance between 1m and 5m from the first fan unit (4).

5. Method according to one of the preceding claims, **characterised by** the reference pressure ($p_1$) being measured downstream, notably at the end of the air duct (2) of the first fan unit (4).

6. Method according to one of the preceding claims, **characterised by** the reference ratio ($\delta_{normal}$) being recalculated and stored at intervals, notably every 15-60 minutes, preferably every 30 minutes.

7. Method according to one of the preceding claims, **characterised by** the reference ratio ($\delta_{normal}$) being recalculated and stored after a change to a setpoint setting of a volume flow control of the first fan unit (4).

8. Method according to claim 6 or 7, **characterised by** the current measured reference pressure ($p_1$) and the most recently stored reference ratio ($\delta_{normal}$) being used for the calculation of the substitute volume flow ($Q_{ST}$).

9. Method according to one of the claims 2 through 8, **characterised by** the substitute volume flow ($Q_{ST}$) being formed as the quotient of the root of the reference pressure ($p_1$) and the calculated reference ratio ($\delta_{normal}$) or as the root of the quotient of the reference pressure ($p_1$) and the calculated reference ratio ($\delta_{normal}$).

10. Method according to one of the preceding claims, **characterised by** the first fan unit (4) being shut off when the reference duct pressure ($p_1$) falls below a specified minimum value.

11. Method according to one of the preceding claims, **characterised by** one of the at least two air ducts (2, 3) forming a supply air duct (2) leading into the room (1) and the other air duct (3) forming an exhaust air duct (3) leading out of the room (1), in which the first fan unit (4) is integrated into one of the air ducts (2, 3) and a second fan unit (5) comprising two or more identically controlled fans (5a, 5b, 5c) is integrated into the other air duct (3).

12. Method according to claim 11, **characterised by** the substitute volume flow ($Q_{ST}$) being used to control the second fan unit (5).

13. Method according to claim 11 or 12, **characterised by** the substitute volume flow ($Q_{ST}$) forming the new set value ($Q_{soll\_ab\_neu}$) for volume flow control of the second fan unit (5) in case of faulty operation of the first fan unit (4).

14. Method according to claim 11, 12 or 13, **characterised by** the substitute volume flow ($Q_{ST}$) multiplied by the ratio of the current set value ($Q_{soll\_ab}$) of volume flow control of the second fan unit (5) to the set value ($Q_{soll\_zu}$) of volume flow control of the first fan unit (4) being used as the new set value ($Q_{soll\_ab\_neu}$) for volume flow control of the second fan unit (5).

15. Method according to one of the claims 11 through 14, **characterised by** a differential pressure ($\Delta p_{ab}$) being determined via at least one fan (5c) of the second fan unit (5) and, using this differential pressure ($\Delta p_{ab}$), a volume flow ($Q_{ab}$) transported by the second fan unit (5) in normal operation being calculated, and a second reference value ($p_2$) being measured at a distance to the second fan unit (5) and, from this and the volume flow ($Q_{ab}$) transported by the second fan unit (5), a second reference ratio ($\delta_{normal\_ab}$) being calculated and stored for use in case of faulty operation of the second fan unit (5), in which, in case of faulty operation of one of the fans (5a, 5b, 5c) of the second fan unit (4), a second substitute volume flow ($Q_{ST\_ab}$) is calculated from the second reference pressure ($p_2$) and the stored second reference ratio ($\delta_{normal\_ab}$).

16. Method according to claim 15, **characterised by** the first and second substitute volume flows ($Q_{ST}$, $Q_{ST\_ab}$) being compared to each other and the smaller substitute volume flow ($Q_{ST}$, $Q_{ST\_ab}$) being used for volume flow control of the first and second fan units (4, 5) in case of faulty operation of both the first and second fan units (4, 5).

17. Ventilation system for a room (1) for realisation of the method according to one of the preceding claims, comprising

- at least two air ducts (2, 3), respectively with an integrated fan unit (4, 5) comprising two or more fans ([4a, 4b, 4c], [5a, 5b, 5c]),
- a differential pressure sensor (6a) to measure the differential pressure ($\Delta p_{zu}$) over at least one fan (4a) of a first fan unit (4),
- a CPU for the calculation of a volume flow ($Q_{zu}$) transported by the first fan unit (4) in normal operation, using the differential pressure ($\Delta p_{zu}$)

in which a pressure sensor (7a) to measure a reference pressure ($p_1$) is arranged at a distance from the first fan unit (4), with the CPU or a second CPU being configured to determine and store a reference ratio ($\delta_{normal}$) from the reference pressure ($p_1$) using the calculated volume flow ($Q_{zu}$), which is available in case of faulty operation, **characterised by** the reference ratio ($\delta_{normal}$) being formed as the quotient of the root of the reference pressure ($p_1$) and the calculated volume flow ($Q_{zu}$) or as the quotient of the reference pressure ($p_1$) and the square of the calculated volume flow ($Q_{zu}$).

18. Ventilation system according to claim 17, **characterised by** being configured, in case of faulty operation of one of the fans (4a, 4b, 4c) of the first fan unit (4), to calculate a substitute volume flow ($Q_{ST}$) from the reference pressure ($p_1$) and the stored reference ratio ($\delta_{normal}$).

19. Ventilation system according to claim 18, **characterised by** having a control unit to control the first and/or at least a second fan unit (5), in which the control unit uses the substitute volume flow ($Q_{ST}$) to control the first and/or second fan unit (4, 5).

**EP 3 002 525 B1**

**Revendications**

1. Procédé de fonctionnement d'une installation de ventilation pour une pièce (1) avec au moins deux canaux d'air (2, 3) contenant chacun un agencement de ventilateurs (4, 5) composé d'au moins deux ventilateurs ([4a, 4b, 4c], [5a, 5b, 5c]) commandés de manière identique, sachant qu'une pression différentielle ($\Delta p_{zu}$) est déterminée par le premier de ces agencements de ventilateurs (4) par l'intermédiaire d'au moins un de ses ventilateurs (4a) et qu'un débit volumique (Qzu) transporté en fonctionnement normal par le premier agencement de ventilateurs (4) est calculé en utilisant cette pression différentielle ($\Delta p_{zu}$),une pression de référence ($p_1$) étant mesurée à distance du premier agencement de ventilateurs (4) et un rapport de référence ($\delta_{normal}$) étant calculé et mémorisé à partir de cette pression et du débit volumique (Qzu) transporté par le premier agencement de ventilateurs (4) pour une utilisation dans un fonctionnement perturbé du premier agencement de ventilateurs (4), **caractérisé en ce que** le rapport de référence ($\delta_{normal}$) est formé à partir du quotient de la racine de la pression de référence ($p_1$) par le débit volumétrique calculé (Qzu) ou à partir du quotient de la pression de référence ($p_1$) par le carré du débit volumétrique calculé (Qzu).

2. Procédé selon la revendication 1, **caractérisé en ce qu'**en cas de fonctionnement perturbé de l'un des ventilateurs (4a, 4b, 4c) du premier agencement de ventilateurs (4), un débit volumique de remplacement ($Q_{ST}$) est calculé à partir de la pression de référence ($p_1$) et du rapport de référence ($\delta_{normal}$) mémorisé.

3. Procédé selon la revendication 2, **caractérisé en ce que** le débit volumique de remplacement ($Q_{ST}$) est utilisé comme valeur réelle pour la régulation du débit volumique du premier agencement de ventilateurs (5).

4. Procédé selon l'une des revendications précédentes, **caractérisé en ce que** la pression de référence ($p_1$) est mesurée à une distance comprise entre 1 et 5 m du premier agencement de ventilateurs (4).

5. Procédé selon l'une des revendications précédentes, **caractérisé en ce que** la pression de référence ($p_1$) est mesurée en aval, en particulier à l'extrémité du conduit d'air (2) du premier agencement de ventilateurs (4).

6. Procédé selon l'une des revendications précédentes, **caractérisé en ce que** le rapport de référence ($\delta_{normal}$) est recalculé et mémorisé à intervalles, notamment toutes les 15 à 60 minutes, de préférence toutes les 30 minutes.

7. Procédé selon l'une des revendications précédentes, **caractérisé en ce que** le rapport de référence ($\delta_{normal}$) est recalculé et mémorisé après une modification d'une valeur nominale d'une régulation du débit volumique du premier agencement de ventilateurs (4).

8. Procédé selon la revendication 6 ou 7, **caractérisé en ce que** le débit volumique de remplacement ($Q_{ST}$) est calculé à partir de la pression de référence ($p_1$) actuellement mesurée et du dernier rapport de référence ($\delta_{normal}$) mémorisé.

9. Procédé selon l'une des revendications 2 à 8, **caractérisé en ce que** le débit volumique de remplacement (QST) est formé à partir du quotient de la racine de la pression de référence ($p_1$) par le rapport de référence calculé ($\delta_{normal}$) ou à partir de la racine du quotient de la pression de référence ($p_1$) par le rapport de référence calculé ($\delta_{normal}$).

10. Procédé selon l'une des revendications précédentes, **caractérisé en ce que** le premier agencement de ventilateurs (4) est désactivé lorsque la pression de canal de référence ($p_1$) est inférieure à une valeur minimale prédéfinie.

11. Procédé selon l'une des revendications précédentes, **caractérisé en ce que** l'un des au moins deux canaux d'air (2, 3) forme un canal d'amenée d'air (2) débouchant dans la pièce (1) et l'autre conduit d'air (3) forme un canal d'évacuation d'air (3) sortant de la pièce (1), sachant que le premier agencement de ventilateurs (4) est situé dans l'un des canaux d'air (2, 3) et qu'un deuxième agencement de ventilateurs (5) constitué d'au moins deux ventilateurs (5a, 5b, 5c) commandés de manière identique est situé dans l'autre canal d'air (3).

12. Procédé selon la revendication 11, **caractérisé en ce que** le débit volumique de remplacement ($Q_{ST}$) est utilisé pour la régulation du débit volumique du second agencement de ventilateurs (5).

13. Procédé selon la revendication 11 ou 12, **caractérisé en ce que** le débit volumique de remplacement ($Q_{ST}$) en fonctionnement perturbé du premier agencement de ventilateurs (4) forme la nouvelle valeur de consigne ($Q_{soll\_ab\_neu}$) d'une régulation de débit volumique du second agencement de ventilateurs (5).

**14.** Procédé selon la revendication 11, 12 ou 13, **caractérisé en ce que** le débit volumique de remplacement ($Q_{ST}$) multiplié par le rapport entre la valeur de consigne actuelle ($Q_{soll\_ab}$) d'une régulation de débit volumique du second agencement de ventilateurs (5) et la valeur de consigne ($Q_{soll\_zu}$) d'une régulation de débit volumique du premier agencement de ventilateurs (4) est utilisé comme nouvelle valeur de consigne ($Q_{soll\_ab\_neu}$) pour la régulation de débit volumique du second agencement de ventilateurs (5).

**15.** Procédé selon l'une des revendications 11 à 14, **caractérisé en ce qu'**une pression différentielle ($\Delta p_{ab}$) est déterminée par l'intermédiaire d'au moins un ventilateur (5c) du second agencement de ventilateurs (5) et que cette pression différentielle ($\Delta p_{ab}$) sert à calculer un débit volumique ($Q_{ab}$) transporté en fonctionnement normal par le second agencement de ventilateurs (5), qu'une seconde pression de référence ($p_2$) est mesurée à distance du second agencement de ventilateurs (5) et qu'un second rapport de référence ($\delta_{normal\_ab}$) est calculé et mémorisé à partir de cette pression et du débit volumique ($Q_{ab}$) transporté par le deuxième agencement de ventilateurs (5) pour une utilisation dans un fonctionnement perturbé du second agencement de ventilateur (5), un second débit volumique de remplacement ($Q_{ST\_ab}$) étant calculé à partir de la seconde pression de référence ($p_2$) et du second rapport de référence ($\delta_{normal\_ab}$) mémorisé, en cas de fonctionnement perturbé de l'un des ventilateurs (5a, 5b, 5c) du second agencement de ventilateurs (4).

**16.** Procédé selon la revendication 15, **caractérisé en ce que**, lorsque le premier et le second agencement de ventilateurs (4, 5) sont tous deux en fonctionnement perturbé, le premier et le deuxième débit volumétrique de remplacement ($Q_{ST}$, $Q_{ST\_ab}$) sont comparés l'un à l'autre et le plus petit débit volumétrique de remplacement ($Q_{ST}$, $Q_{ST\_ab}$) est utilisé pour la régulation du débit volumétrique du premier et du second agencement de ventilateurs (4, 5).

**17.** Installation de ventilation pour une pièce (1) pour l'implémentation du procédé selon l'une des revendications précédentes, comprenant au

- moins deux canaux d'air (2, 3) contenant chacun un agencement de ventilateurs (4, 5) constitué d'au moins deux ventilateurs ([4a, 4b, 4c], [5a, 5b, 5c]),
- un capteur de pression différentielle (6a) pour mesurer la pression différentielle ($\Delta p_{zu}$) établie par au moins un ventilateur (4a) d'un premier des agencements de ventilateurs (4),
- une unité de calcul pour calculer un débit volumique (Qzu) transporté en fonctionnement normal par le premier agencement de ventilateurs (4) en utilisant la pression différentielle ($\Delta p_{zu}$),

sachant qu'un capteur de pression (7a) est disposé à distance du premier agencement de ventilateurs (4) pour mesurer une pression de référence (p1), et que l'unité de calcul ou une deuxième unité de calcul est conçue pour déterminer et mémoriser, à partir de la pression de référence ($p_1$) et en utilisant le débit volumique calculé (Qzu), un rapport de référence ($\delta_{normal}$) disponible en cas de fonctionnement perturbé, **caractérisée en ce que** le rapport de référence ($\delta_{normal}$) est formé par le quotient de la racine de la pression de référence ($p_1$) par le débit volumique calculé (Qzu) ou par le quotient de la pression de référence ($p_1$) par le carré du débit volumique calculé (Qzu).

**18.** Installation de ventilation selon la revendication 17, **caractérisé en ce qu'**en cas de fonctionnement perturbé de l'un des ventilateurs (4a, 4b, 4c) du premier agencement de ventilateurs (4), l'installation est configurée pour calculer un débit volumique de remplacement ($Q_{ST}$) à partir de la pression de référence ($p_1$) et du rapport de référence ($\delta_{normal}$) mémorisé.

**19.** Installation de ventilation selon la revendication 18, **caractérisé en ce qu'**elle comprend une unité de régulation pour réguler le premier et/ou au moins un deuxième des agencement de ventilateurs (5), sachant que l'unité de régulation utilise le débit volumique de remplacement ($Q_{ST}$) pour réguler le premier et/ou le second ensemble de ventilateurs (4, 5).

Fig. 1

EP 3 002 525 B1

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014123044 A1
- FR 2957661 A1
- US 4995307 A
- GB 2257547 A